Europäisches Patentamt

European Patent Office

Office européen des brevets

(19)

(11) Veröffentlichungsnummer: **0 067 905**
**A1**

(12) **EUROPÄISCHE PATENTANMELDUNG**

(21) Anmeldenummer: 81109901.9

(22) Anmeldetag: 25.11.81

(51) Int. Cl.³: **G 08 G 1/10**
G 08 G 1/015, G 01 S 13/92

(30) Priorität: 22.06.81 CH 4107/81

(43) Veröffentlichungstag der Anmeldung:
29.12.82 Patentblatt 82/52

(84) Benannte Vertragsstaaten:
AT BE DE FR GB NL SE

(71) Anmelder: ZELLWEGER USTER AG
Wilstrasse 11
CH-8610 Uster(CH)

(72) Erfinder: Goede, Simon
Hoehenstrasse 27
CH-8620 Wetzikon(CH)

(74) Vertreter: Dipl.-Phys.Dr. Manitz Dipl.-Ing. Finsterwald
Dipl.-Ing. Grämkow Dipl.-Chem.Dr. Heyn
Dipl.-Phys.Rotermund Morgan B.Sc.(Phys.)
Robert-Koch-Strasse 1
D-8000 München 22(DE)

(54) Verfahren und Vorrichtung zur Auswertung von Signalen einer Geschwindigkeitsmesseinrichtung.

(57) Die Erfindung betrifft ein Verfahren und eine Vorrichtung zur Auswertung von Signalen einer Doppler-Radar-Geschwindigkeitsmesseinrichtung. Im Gegensatz zu bekannten Einrichtungen gestattet es die Erfindung für unterschiedliche Fahrzeugkategorien, das heisst Lastkraftwagen und Personenkraftwagen unterschiedliche Höchstgeschwindigkeitsgrenzwerte anzusetzen und nur diejenigen vermessenen Fahrzeuge in einem Lichtbild festzuhalten, welche den ihrer Kategorie zugeordneten Höchstgeschwindigkeitswert überschritten haben. Von jedem den Radarstrahlbereich durchfahrenden Fahrzeug wird ein Längenkriterium aufgrund der dabei verursachten Anzahl von Doppler-Schwingungen gebildet. Aufgrund des so ermittelten Längenkriteriums wird beim Vergleich der gemessenen Geschwindigkeit mit der zulässigen Geschwindigkeitsgrenze der jeweils der betreffenden Kategorie zugeordnete Höchstgeschwindigkeitsgrenzwert herangezogen.

Anwendung bei der Geschwindigkeitskontrolle von Fahrzeugen an Stellen, wo für verschiedene Fahrzeugkategorien unterschiedliche Höchstgeschwindigkeitswerte signalisiert sind.

./...

EP 0 067 905 A1

Fig. 1          100

- 4 -

Verfahren und Vorrichtung zur Auswertung von Signalen einer Geschwindigkeitsmesseinrichtung

---

Die Erfindung bezieht sich auf ein Verfahren und eine Vorrichtung zur Auswertung von Signalen einer Geschwindigkeitsmesseinrichtung.

Aus dem schweizerischen Patent 470 674 sind ein Verfahren und eine Vorrichtung zur Kameraauslösung bei einer Doppler-Radar-Geschwindigkeitsmesseinrichtung bekannt, bei welchen eine Lichtbildauslösung bei Geschwindigkeitsübertretung nur dann zustande kommt, wenn Gewähr besteht, dass der gemessene Geschwindigkeitswert in eindeutiger Weise einem bestimmten, auf dem Lichtbild erkennbaren Fahrzeug, zugeordnet werden kann.

Bekannte Geräte sind so ausgebildet, dass sie zwar in einem grossen Bereicht auf jeweils einen zulässigen Höchstgeschwindigkeitswert eingestellt werden können. Ein einmal eingestelltes Gerät spricht dann aber immer nur bei diesem ausgewählten Geschwindigkeitswert an und es ist daher nicht geeignet, automatisch für verschiedene Fahrzeugkategorien festgelegte unterschiedliche Höchstgeschwindigkeitswerte zu berücksichtigen.

Nachdem immer häufiger, mindestens für kritische Strassenabschnitte, für Fahrzeuge unterschiedlicher Kategorie, also beispielsweise für Personenkraftwagen und Lastkraftwagen, aus Gründen der Verkehrssicherheit unterschiedliche zulässige Höchstgeschwindigkeiten verfügt und signalisiert werden, liegt der Erfindung die Aufgabe zugrunde, ein Geschwindigkeitsmessverfahren und die entsprechende Vorrichtung derart weiter auszubilden, dass automatisch der jeweils für die Fahrzeugkategorie eines vermessenen

7 81 01

Fahrzeuges festgelegte Geschwindigkeitshöchstwert für die Beurteilung einer Geschwindigkeitsübertretung berücksichtigt wird.

Gelöst wird diese Aufgabe durch die in den Ansprüchen niedergelegten Massnahmen.

Im folgenden wird die Erfindung anhand der beiliegenden Zeichnung beispielsweise erläutert. Dabei zeigt:

Fig. 1 ein Schaltbild einer zum Stande der Technik gehörenden Doppler-Radar-Geschwindigkeitsmesseinrichtung;

Fig. 2 eine schematische Darstellung der Durchfahrt eines Fahrzeugs durch einen Radarstrahlbereich;.

Fig. 3 ein Schaltbild eines ersten Ausführungsbeispiels;

Fig. 4 ein alternatives Ausführungsbeispiel für einen Zähler und einen Dekodierer;

Fig. 5 ein Funktionsschema gemäss dem alternativen Ausführungsbeispiel nach Fig. 4;

Fig. 6 eine weitere Variante der Erfindung mit einem Mikroprozessor zur Signalverarbeitung;

Fig. 7 ein Flussdiagramm für Ablauf der Signalverarbeitung gemäss der Variante Fig. 6.

In allen Figuren sind sich entsprechende Teile mit den gleichen Hinweiszeichen versehen. Die Figuren sind nicht massstäblich gezeichnet.

- 6 -

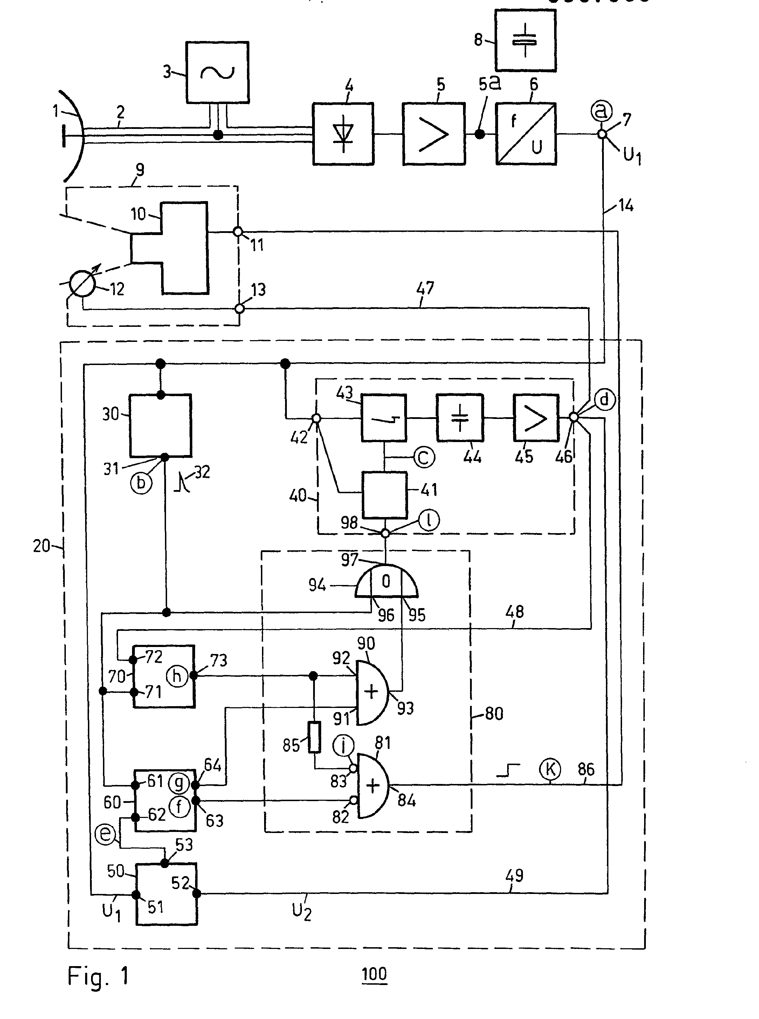

Die Fig. 1 ist der erwähnten schweizerischen Patentschrift 470 674
entnommen.

Im weiteren sei kurz der Aufbau und die Wirkungsweise der zum zitierten
Stande der Technik gehörenden Vorrichtung zusammengefasst.

In Fig. 1 bezeichnet 1 ein Sende- und Empfangsantennensystem einer
Doppler-Radar-Geschwindigkeitsmesseinrichtung 100. 2 bezeichnet ein
Hohlleitersystem, welches einen Sendeteil 3 sowohl mit dem Sende- und
Empfangsantennensystem 1 als auch mit einer Mischstufe 4 verbindet. In
der Mischstufe 4 wird das Dopplersignal mit der Frequenz $f_D$ gebildet.
Dieses Dopplersignal $f_D$ tritt, nach Verstärkung in einem Verstärker 5,
an einem Schaltpunkt 5a auf. Dem Verstärker 5 ist ein Frequenz/Spannungswandler 6 nachgeschaltet, welcher aus der Dopplerfrequenz $f_D$ einen der
Dopplerfrequenz und damit der momentanen Geschwindigkeit des vermessenen
Fahrzeuges entsprechenden Messwert $U_1$ bildet, welcher am Schaltungspunkt 7
verfügbar ist. Eine Stromversorgungsanlage 8 für die einzelnen Schaltungsteile der Geschwindigkeitsmesseinrichtung ist nur symbolisch dargestellt.

Eine Lichtbildaufnahmevorrichtung 9 enthält eine durch ein elektrisches
Signal auslösbare Kamera 10 mit einer Klemme 11 für die Zufuhr des Auslösesignals. Ein beispielsweise in km/h geeichtes Messinstrument 12,
welchem über eine Klemme 13 ein der gemessenen Geschwindigkeit entsprechender Messwert zugeführt wird, wird bei der Kameraauslösung mit bekannten
optischen Mitteln in die Lichtbildaufnahme des vermessenen Fahrzeuges
eingeblendet, sodass auf jeder Aufnahme mindestens das vermessene Fahrzeug und der gemessene Geschwindigkeitswert erscheinen.

Eine Einrichtung 20 wertet den ihr über eine Leitung 14 von der Klemme 7 zugeführten Messwert $U_1$ aus und gibt, wenn bestimmte, in der zitierten Patentschrift aufgeführte Bedingungen erfüllt sind, ein Kameraauslösesignal K an einer Klemme 84 über eine Leitung 86 über die Klemme 11 an die Kamera 10 ab.

Ein Einfahrtmelder 30 überwacht den ihm über die Leitung 14 von der Klemme 7 zugeführten Messwert $U_1$ und gibt an seiner Ausgangsklemme 31 einen Einfahrt-Meldeimpuls 32 ab, wenn ein Fahrzeug in den wirksamen Radarstrahlbereich $\alpha$ eingefahren ist.

Ein Messwertspeicher 40 enthält einen elektronischen Rechner 41 bekannter Art, welcher, sofern die ihm über eine Eingangsklemme 42 zugeführte Spannung, das heisst der Messwert $U_1$, gewisse Bedingungen erfüllt, eine zuvor die Eingangsklemme 42 mit einem Speicherorgan 44 verbindende Trennstufe 43 öffnet und dadurch in diesem Speicherorgan 44, beispielsweise einem Kondensator, den unmittelbar vor der Oeffnung der Trennstufe 43 herrschenden speziellen Messwert $U_2$ des sonst im allgemeinen variablen Messwertes $U_1$ speichert. Dieser spezielle Messwert $U_2$ wird über einen Verstärker 45 an eine Ausgangsklemme 46 des Messwertspeichers 40 geleitet. Die Einrichtung 20 enthält weiterhin einen Differenzmelder 50 zum Vergleich der Messwerte $U_2$ und $U_1$, sowie eine bistabile Schaltvorrichtung 60 für die Abgabe eines Kameraauslösesignals K vom Ausgang 84 über die Leitung 86 an die Kamera 10, sofern die genannten bestimmten Bedingungen erfüllt sind. Darüber und über einen Messzeitrechner 70 gibt die zitierte Patentschrift näheren Aufschluss.

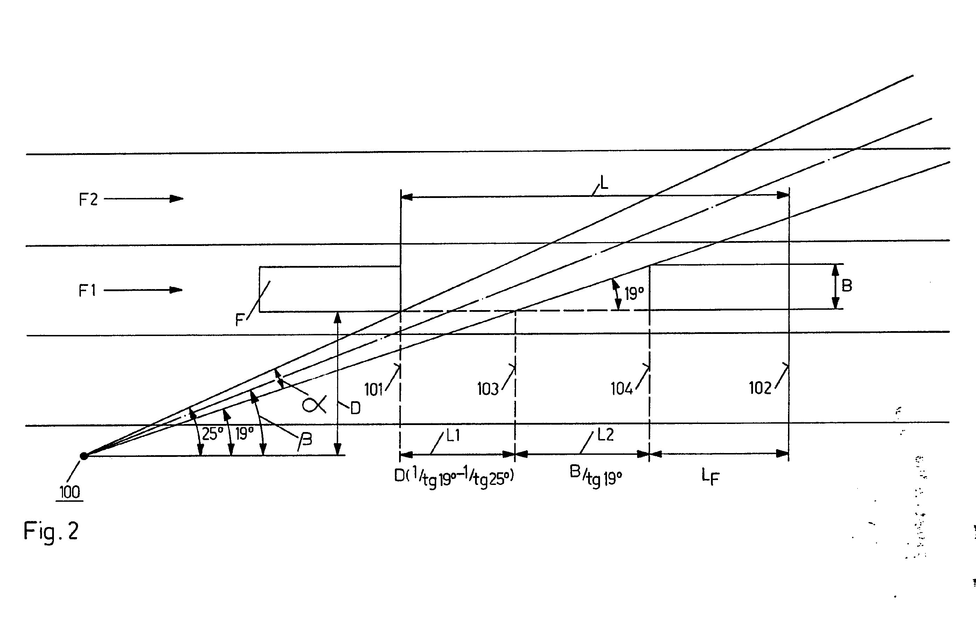

Die Fig. 2 zeigt eine schematische Darstellung der Durchfahrt eines
Fahrzeuges durch einen Radarstrahlbereich mit dem Oeffnungswinkel $\alpha$ .
Beispielsweise deckt dieser im Bereich der Fahrspuren $F_1$ und $F_2$ einen
Winkelbereich von 19° bis 25° bezogen auf die Richtung der Fahrspuren.

Ein Fahrzeug F ist gerade in der Position 101 angelangt, in welcher es in
den Radarstrahlbereich $\alpha$ eintritt. Ab diesem Zeitpunkt verursacht
das durchfahrende Fahrzeug in der Doppler-Radar-Geschwindigkeitsmesseinrichtung 100 ein Dopplersignal $f_D$ am früher genannten Schaltungspunkt 5a
(siehe Fig. 1). Nach Zurücklegung der Fahrtstrecke L ist die Durchfahrt
des Fahrzeuges F beendet, indem dann sein Heck den Radarstrahlbereich
$\alpha$ eben verlässt. Es befindet sich dann in seiner Position 102.

Während jeder einzelnen Dopplerschwingung während der Zurücklegung der
Fahrtstrecke L hat sich die auf dem vermessenen Fahrzeug momentan wirksame Reflexionsstelle von der Geschwindigkeitsmesseinrichtung 100 aus
gesehen auf dem Fahrzeug jeweils um ein definiertes Streckenelement "e"
entlang der Fahrtrichtung bewegt, beziehungsweise verschoben. Die Länge
des Streckenelementes e errechnet sich nach der Formel

$e = \frac{1}{2} \lambda \cos \beta$ , wobei $\lambda$ = Wellenlänge des Radarsenders,

$\beta$ = Winkel des Radarhauptstrahls zur Fahrbahnrichtung.

Die Länge L der Fahrtstrecke setzt sich zusammen aus den drei Teillängen
$L_1$, $L_2$ und $L_F$. Die Teillänge $L_1$ erfasst den Abschnitt von Eintritt der
vorderen rechten Ecke des Fahrzeuges F in den 25°-Randstrahl des Radar-
bereiches $\alpha$ bis zum Austritt dieser Ecke aus dem 19°-Randstrahl bei Position 103. Während der Durchfahrt durch die Teillänge $L_1$ liegt die Reflexionsstelle am Fahrzeug D im wesentlichen auf dessen rechter Seitenwand, beziehungsweise auf geeigneten Stellen derselben. Etwa ab Position 103 treten in der Teillänge $L_2$ hauptsächlich Stellen der Heckpartie des Fahrzeuges als wirksame Reflexionsstellen auf. Dies ist der Fall bis sich die Heckpartie zur Position 104 bewegt hat, in welcher sie den 19°-Randstrahl eben verlässt.

Die Front des Fahrzeuges F befindet sich dann, um die Fahrzeuglänge $L_F$ weiter rechts, bei Position 102.

Das Fahrzeug F fährt dabei in einem seitlichen Abstand D an der Doppler-Radar-Geschwindigkeitsmesseinrichtung 100 vorbei. Die Fahrzeugbreite ist mit B bezeichnet.

Für die erste Teillänge $L_1$ ergibt sich im angenommenen Beispiel

$$L_1 = D \left( \frac{1}{\text{tg } 19°} - \frac{1}{\text{tg } 25°} \right) \quad \text{und}$$

für die Teillänge $L_2$ ergibt sich

$$L_2 = \frac{B}{\text{tg } 19°} \quad ,$$

während die dritte Teillänge $L_F$ gleich der Fahrzeuglänge ist.

Zählt man nun die durch das Fahrzeug F während der Zurücklegung seiner Fahrtstrecke L, das heisst vom Eintritt in den Radarstrahlbereich, also seit der Abgabe des Einfahrtmeldeimpulses 32 (siehe Fig. 1) bis zum Austritt aus demselben, markiert durch das Verschwinden des Dopplersignals, verursachten Dopplerschwingungen, so erhält man eine der Länge dieser Fahrtstrecke L proportionale Zahl N von Dopplerschwingungen. Multipliziert man diese Zahl N mit der Länge des erwähnten Streckenelementes e, so erhält man die Länge L. Selbstverständlich ist die Länge L und damit die Zahl N auch abhängig vom seitlichen Abstand D des Fahrzeuges F von der Doppler-Radar-Geschwindigkeitsmesseinrichtung 100, wie dies aus Fig. 2 ersichtlich ist. Die nachfolgenden Tabellen I, II und III geben Aufschluss über die Abhängigkeit der Zahl N bei einer Doppler-Radar-Geschwindigkeitsmesseinrichtung, welche mit einer Wellenlänge von $\lambda$ = 3 cm arbeitet, vom seitlichen Abstand D des Fahrzeuges von der Geschwindigkeitsmesseinrichtung 100. Der Winkel $\beta$ beträgt dabei 22°. Das ergibt für das Streckenelement e einen Wert von rund 1,4 cm.

Die Tabelle I gilt dabei für einen Personenkraftwagen mit einer Fahrzeuglänge $L_F$ = 4,5 m und einer Breite B von 1,5 m. Die Tabelle II gilt für einen Minibus mit einer Fahrzeuglänge $L_F$ = 6 m und einer Breite B von 2 m.

Die Tabelle III gilt für einen Lastkraftwagen mit einer Fahrzeuglänge $L_F$ = 10 m und einer Breite B von 2,5 m.

Tabelle I

PKW: $L_F$ = 4,5 m

     B = 1,5 m

| D (m) | L (m) | N |
|-------|-------|------|
| 1 | 9,6 | 690 |
| 3 | 11,1 | 800 |
| 5 | 12,7 | 910 |
| 8 | 14,9 | 1070 |

Tabelle II

Minibus: $L_F$ = 6 m

     B = 2 m

| D (m) | L (m) | N |
|-------|-------|------|
| 1 | 12,6 | 900 |
| 3 | 14,1 | 1010 |
| 5 | 15,6 | 1120 |
| 8 | 17,9 | 1290 |

Tabelle III

LKW: $L_F$ = 10 m

B = 2,5 m

| D (m) | L (m) | N |
|-------|-------|------|
| 1 | 18,0 | 1300 |
| 3 | 19,5 | 1400 |
| 5 | 21,1 | 1510 |
| 8 | 23,3 | 1680 |

Man erkennt aus den Tabellen I und II, dass Personenkraftwagen und Minibusse im ganzen Bereich von 1 bis 8 m seitlichem Abstand für N stets Zahlen unter 1300 ergeben, wogegen für Lastwagen Zahlen ab 1300 aufwärts erhalten werden. Selbstverständlich ist die Zahl N für längere Lastwagen oder gar Lastwagenzüge noch erheblich grösser. Die Feststellung der Zahl N nach Abschluss der Durchfahrt eines vermessenen Fahrzeuges lässt also erkennen, welcher Fahrzeugkategorie es angehört, das heisst, ob es ein Personenkraftwagen beziehungsweise ein Minibus ist oder ob ein Lastkraftwagen beziehungsweise Lastkraftwagenzug durchgefahren ist.

Die festgestellte Zahl N stellt daher ein ausgezeichnetes Längenkriterium dar, anhand dessen der für das betreffende Fahrzeug gültige Höchstgeschwindigkeitswert für die Feststellung einer allfälligen Geschwindigkeitsübertretung automatisch gewählt werden kann.

Wie bisher, das heisst nach der zitierten Patentschrift, wird daher mit der Doppler-Radar-Geschwindigkeitsmesseinrichtung 100 anhand der Doppler-Frequenz $f_D$ die Geschwindigkeit des vermessenen Fahrzeuges bestimmt. Nach Prüfung und Beurteilung dieses Wertes wird zunächst wie bisher das Kameraaulösesignal K gebildet, wobei nun aber gemäss der Erfindung dieses Kameraauslösesignal K nur dann tatsächlich zur Kameraauslösung weitergeleitet wird, wenn für das vermessene Fahrzeug der für die anhand der Zahl N, das heisst des Längenkriteriums, bestimmten Fahrzeugkategorie massgebliche Höchstgeschwindigkeitswert durch das vermessene Fahrzeug auch tatsächlich überschritten worden ist.

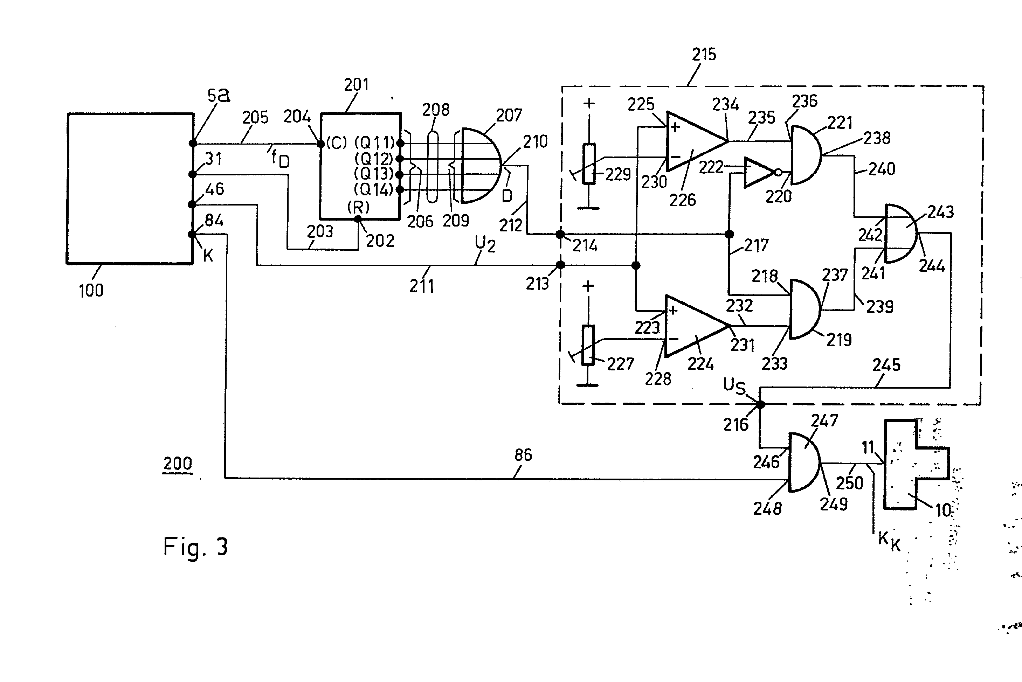

Die Fig. 3 zeigt ein Schaltbild eines ersten Ausführungsbeispiels einer Vorrichtung 200 zur Ausführung des erfindungsgemässen Verfahrens.

Die aus dem Stande der Technik bekannte Doppler-Radar-Geschwindigkeitsmesseinrichtung 100, siehe Fig. 1, weist einen Schaltungspunkt 5a für die Abgabe des Dopplersignals $f_D$, eine Ausgangsklemme 31 für die Abgabe eines Einfahrt-Meldeimpulses 32, eine Ausgangsklemme 46 für den speziellen Messwert $U_2$ sowie einen Ausgang 84 für die Abgabe eines Kameraauslösesignals K auf.

Die Vorrichtung 200 weist einen der Doppler-Radar-Geschwindigkeitsmesseinrichtung 100 nachgeordneten Zähler 201 auf. Dessen Löscheingang 202 (R = reset) ist über eine Leitung 203 mit der Ausgangsklemme 31 für die Abgabe eines Einfahrtmeldeimpulses 32 anlässlich der Einfahrt eines zu vermessenden Fahrzeuges in den Radarstrahlbereich verbunden. Jeder solche Einfahrtmeldeimpuls 32 setzt daher den Zähler 201 auf Null zurück. Der Takteingang (C = clock) 204 des Zählers 201 ist über eine Leitung 205 mit dem Schaltungspunkt 5 a der Doppler-Radar-Geschwindigkeitsmesseinrichtung 100 verbunden. Dadurch werden die während der Durchfahrt eines zu vermessenden Fahrzeuges am Schaltungspunkt 5a auftretenden Dopplerschwingungen $f_D$ gezählt, so dass der Stand des Zählers 201 am Ende der Durchfahrt des vermessenen Fahrzeuges die bereits erwähnte Zahl N erreicht hat. Dieses Zählerergebnis wird durch die an den Ausgängen $Q_{11}$, $Q_{12}$, $Q_{13}$ und $Q_{14}$ anstehenden Signale in kodierter Form dargestellt. Diese Zählerausgänge sind in Fig. 3 gesamthaft mit 206 bezeichnet. Als Zähler 201 kann beispielsweise eine Kombination von zwei in Serie geschalteten Zählerbausteinen des Typs MC 4040 der Firma Motorola Inc. USA verwendet werden. Weitere Angaben über geeignete Zähler finden sich beispielsweise in dem Buch:

"Halbleiter-Schaltungstechnik von U. Tietze und Ch. Schenk, 5. Auflage 1980, Springer Verlag, Berlin, Heidelberg, New York, Kapitel 20".

Zur Erkennung eines bestimmten Wertes der Zahl N anlässlich der Durchfahrt eines zu vermessenden Fahrzeuges ist dem Zähler 201 ein Dekodierer 207 nachgeschaltet. Die Zählerausgänge 206 sind über die Verbindungen 208 mit den Eingängen 209 des Dekodierers 207 verbunden. Der Ausgang des Dekodierers 207 ist mit 210 bezeichnet. Der Zähler 201 und der Dekodierer 207 sind in diesem einfachen Ausführungsbeispiel so ausgebildet, dass der Dekodierer 207 beim Erreichen von Werten bis und mit dem Zahlenwert $2^{10} - 1 = 1023$ das logische Ausgangssignal "0" und ab dem Wert $2^{10} = 1024$ bis zum Wert $2^{14} - 1 = 16383$ das logische Signal "1" an seinem Ausgang 210 abgibt.

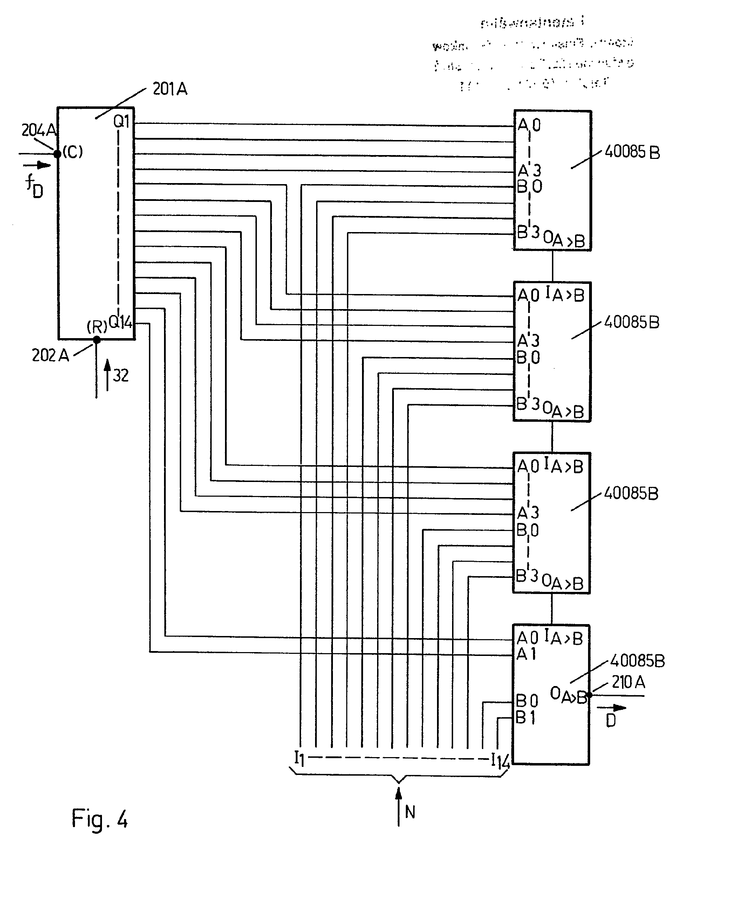

Mit Hilfe der weiter unten beschriebenen, komplizierteren Schaltung, gemäss Figur 4, kann ein Dekodierer realisiert werden, welcher in einem grossen Bereich auf eine genaue gewünschte Zahl N eingestellt werden

kann. Zum Beispiel könnte ein solcher Dekodierer so eingestellt werden, dass er beim Erreichen von Zählwerten bis und mit 1299 das logische Ausgangssignal "0" und bei Zählwerten ab 1300 das logische Ausgangssignal "1" an seinem Ausgang 210 abgibt. Das heisst also, dass immer wenn ein Personenkraftwagen oder ein Minibus vermessen worden ist, am Ausgang 210 das logische Signal "0" auftritt, hingegen für Lastkraftwagen oder Lastkraftwagenzüge wegen der Ueberschreitung des kritischen Wertes für die Zahl N stets ein logisches Signal "1" am Ausgang 210 auftritt.

Festzustellen ist nun, dass das Dekodierungssignal "D" aufgrund des Längenkriteriums N gebildet ist und die Basis dafür darstellt, welcher von beispielsweise zwei festgelegten Höchstgeschwindigkeitswerten für das vermessene Fahrzeug zur Beurteilung einer allfälligen Höchstgeschwindigkeitsüberschreitung anzuwenden ist.

Der Messwert $U_2$ (siehe Fig. 1 und zugehöriger Text), welcher für die am vermessenen Fahrzeug tatsächlich gemessene Geschwindigkeit massgeblich ist und welcher bei der Doppler-Radar-Geschwindigkeitsmesseinrichtung 100 an ihrer Ausgangsklemme 4b auftritt einerseits und das Dekodierausgangssignal D vom Ausgang 210 des Dekodierers 207 anderseits werden über eine Leitung 211 beziehungsweise 212 zur ersten Eingangsklemme 213 beziehungsweise zur zweiten Eingangsklemme 214 einer Uebertretungsschaltanordnung 215 zugeführt und darin verarbeitet, um gegebenenfalls ein Uebertretungssignal $U_S$ an ihrer Ausgangsklemme 216 abzugeben.

In der Uebertretungsschaltanordnung 215 wird das Dekodiersignal D einerseits von der Eingangsklemme 214 über eine Leitung 217 einem ersten Eingang 218 eines ersten UND-Tores 219 direkt und einem ersten Eingang 220 eines zweiten UND-Tores 221 über einen Inverter 222 zugeführt. In der Uebertretungsschaltanordnung 215 wird der Messwert $U_2$ von der Eingangsklemme 213 je an den nichtinvertierenden Eingang 223 eines als erster Komparator 224 betriebenen Operationsverstärkers und an den nichtinvertierenden Eingang 225 eines als zweiter Komparator 226 betriebenen weiteren Operationsverstärkers geführt.

Einerseits wird nun mittels des ersten Komparators 224 der Messwert $U_2$ verglichen mit einem Grenzwert $U_{2L}$, welcher an einem ersten Spannungsteiler 227 als Grenzwert für die zugelassene Höchstgeschwindigkeit von Lastwagen eingestellt ist und welcher dem invertierenden Eingang 228 des ersten Komparators 224 zugeführt ist. Andererseits wird jedoch der Grenzwert $U_2$ mittels des zweiten Komparators 226 verglichen mit einem Grenzwert $U_{2P}$, welcher an einem zweiten Spannungsteiler 229 als Grenzwert für die zugelassene Höchstgeschwindigkeit von Personenkraftwagen eingestellt ist und welcher dem invertierenden Eingang 230 des zweiten Komparators 226 zugeführt ist.

Am Ausgang 231 des ersten Komparators 224 und dem über eine Leitung 232 an den genannten Ausgang 231 angeschlossenen zweiten Eingang 233 eines ersten UND-Tores 219 erscheint ein logisches Signal "0" sofern der der Eingangsklemme 213 zugeführte Messwert $U_2$ kleiner ist als der eingestellte Vergleichswert $U_{2L}$. Wird dieser Wert hingegen erreicht oder überschritten, so erscheint am Ausgang 231 des ersten Komparators 224 ein Signal logisch "1". Dies ist ein Zeichen dafür, dass der eingestellte Höchstgeschwindigkeitswert für Lastkraftwagen vom vermessenen Fahrzeug überschritten worden ist.

In analogerweise erscheint am Ausgang 234 und dem über eine Leitung 235 an dem genannten Ausgang 234 angeschlossenen zweiten Eingang 236 des zweiten UND-Tores 221 ein logisches Signal "0" sofern der an der Eingangsklemme 213 zugeführte Messwert $U_2$ kleiner ist als der eingestellte Vergleichswert $U_{2P}$. Wird dieser Wert hingegen erreicht oder überschritten, so erscheint am Ausgang 234 des zweiten Komparators 226 ein Signal logisch "1". Dies ist ein Zeichen dafür, dass der eingestellte Höchstgeschwindigkeitswert für Personenkraftwagen vom vermessenen Fahrzeug überschritten worden ist.

Der erste Komparator 224 und das erste UND-Tor 219 dienen daher dazu, die Information Geschwindigkeitsmesswert $U_2$ und Längenkriterium Lastkraftwagen miteinander zu verknüpfen und der zweite Komparator 226 und das zweite UND-Tor 221 dienen dazu die Information Geschwindigkeitsmesswert $U_2$ und Längenkriterium Personenkraftwagen miteinander zu verknüpfen.

Sobald daher anhand des Längenkriteriums N die Durchfahrt eines Lastkraftwagens signalisiert wird, wird der Geschwindigkeitsmesswert $U_2$ mit dem für Lastkraftwagen bestimmten Höchstgeschwindigkeitswert verglichen und bei Ueberschreiten dieses Wertes ein entsprechendes Ueberschreitungssignal $U_S$ am Ausgang 237 des ersten UND-Tors 219 gebildet. Wird dagegen anhand des Längenkriteriums N die Durchfahrt eines Personenkraftwagens signalisiert, so wird der Geschwindigkeitsmesswert $U_2$ mit dem für Personenkraftwagen bestimmten Höchstgeschwindigkeitswert verglichen und bei Ueberschreitung dieses Wertes ein entsprechendes Uebertretungssignal $U_S$ am Ausgang 238 des zweiten UND-Tores gebildet.

Von den genannten Ausgängen 237 und 238 werden die genannten Uebertretungssignale $U_S$ über die Leitung 239 beziehungsweise 240 dem ersten Eingang 241 beziehungsweise dem zweiten Eingang 242 eines ODER-Tores 243 zugeführt und von dessen Ausgang 244 über eine Leitung 245 an die das Uebertretungssignal $U_S$ abgebende Ausgangsklemme 216 der Uebertretungsschaltanordnung 215 geleitet.

Das mittels der Uebertretungsschaltanordnung 215 gebildete, von der Kategorie des vermessenen Fahrzeuges abhängige Geschwindigkeitsübertretungssignal $U_S$ wird von dieser Ausgangsklemme 216 dem ersten Eingang 246 eines dritten UND-Tores 247 zugeführt, an dessen zweiten Eingang 248 über die Leitung 86 das vom Ausgang 84 (siehe Fig. 1) kommende Kameraauslösesignal K zugeführt ist.

Am Ausgang 249 kommt somit nur ein Signal logisch "1" zustande, wenn sowohl das Uebertretungssignal $U_S$ von der Ausgangsklemme 216 als auch das Kameraauslösesignal K von der Radar-Geschwindigkeitsmesseinrichtung 100 dem dritten UND-Tor 247 gleichzeitig zugeführt sind. Es ensteht dadurch ein Fahrzeugkategorie-abhängiges Kameraauslösesignal $K_K$, welches über eine Leitung 250 dem Kameraauslösekontakt 11 der Kamera 10 zugeführt ist.

Die Entscheidung, ob für die Geschwindigkeitsübertretung der für Lastkraftwagen oder der für Personenkraftwagen massgebliche Geschwindigkeitshöchstwert zu berücksichtigen ist, erfolgt, wie erwähnt, aufgrund des Längenkriteriums N. Es bleibt dabei dem Benützer der Erfindung anheimgestellt, welches kritische Längenmass, ausgedrückt durch die Zahl N er für die Entscheidung über die Fahrzeugkategorie anwenden möchte. Die Zahl N hängt ja auch noch von der Wellenlänge $\lambda$ des zur Anwendung gelangenden Radarsenders ab und kann daher, beispielsweise bei der Benützung kürzerer Wellenlängen als in unserem beschriebenen Beispiel angenommen, wesentlich höhere Werte annehmen, als in unserem beschriebenen Fall. Aber auch die örtlichen Verhältnisse, etwa grösserer seitlicher Abstand D der Doppler-Radar-Geschwindigkeitsmesseinrichtung 100 von der ersten Fahrspur $F_1$ ergeben andere Werte für N als in den vorstehend aufgeführten Tabellen I, II und III.

Soll ein Gerät nach der vorliegenden Erfindung in der Anwendung flexibel sein, so empfiehlt sich die Verwendung einer Alternative für die Auslegung des Zählers 201 und des Dekodierers 207 mittels digitaler Bausteine.

Die Fig. 4 stellt schematisch ein solches alternatives Ausführungsbeispiel für Zähler und Dekodierer dar. Ein digitaler Zähler 201A liefert sein kodiertes Ausgangssignal von seinen Ausgängen $Q_1$ bis $Q_{14}$ an die Eingänge $A_0$ bis $A_3$ von drei digitalen Bausteinen des Typs 40085 B und an die Eingänge $A_0$ und $A_1$ eines weiteren solchen Bausteins der Firma Fairchild, Mountain View, California, USA in einer Anordnung nach deren "CMOS DATA BOOK, 1977", Seiten 7-347 bis 7-350.

Die Ausgänge $I_1$ bis $I_{14}$ eines bekannten beispielsweise aus Schiebeschaltern aufgebauten Dekodierschalters sind mit den Eingängen $B_1$ bis

$B_3$ der genannten drei Digital-Bausteine 40085 B und die Eingänge $B_0$

und $B_1$ des vierten solchen Bausteins verbunden. Ueber den Kodierschalter wird die für den betreffenden Anwendungsfall gewünschte Zahl N für die Fahrzeugkategorie-Grenze eingegeben. Beispielsweise ergeben sich für

die Anschlüsse $I_1$ bis $I_{14}$ für den Wert N = 1300 die folgenden Signale:

$I_1 = 0$, $I_2 = 0$, $I_3 = 1$, $I_4 = 0$, $I_5 = 1$, $I_6 = 0$, $I_7 = 0$, $I_8 = 0$,

$I_9 = 1$, $I_{10} = 0$, $I_{11} = 1$, $I_{12} = 0$, $I_{13} = 0$, $I_{14} = 0$.

Am Ausgang 210A des letzten der vier in Kaskade geschalteten Digital-Bausteine 40085 B erscheint das Dekodiersignal D, welches Aufschluss gibt, ob die am Eingang 204A eingegebene Anzahl Doppler-Schwingungen, während der Durchfahrt eines vermessenen Fahrzeuges, die Zahl N unterschreitet oder ob sie gleich oder grösser als diese Zahl N ist.

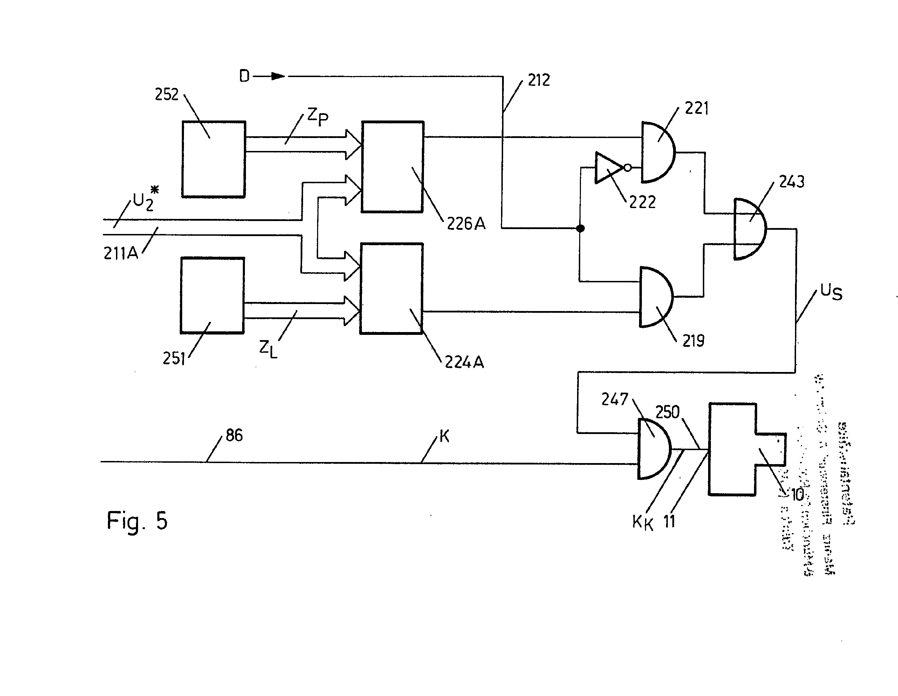

Für ein solches alternatives Ausführungsbeispiel ergibt sich ein Funktionsschema gemäss Fig. 5. Ueber eine Leitung 211A wird den beiden digitalen Komparatoren 224A und 226A der als digitales Signal $U_2^*$ aufbereitete Geschwindigkeitsmesswert zugeführt. Jedem der beiden digitalen Komparatoren 224A und 226A wird ausserdem der jeweilige Höchstgeschwindigkeitsgrenzwert als digitaler Zahlenwert $Z_L$ für Lastkraftwagen bzw. $Z_P$ für Personenkraftwagen von zugeordneten Kodierschaltern 251 bzw. 252 zugeführt.

Die logische Verknüpfung im Anschluss an die Komparatoren 224A und 226A entspricht völlig derjenigen gemäss Fig. 3 und dem zugehörigen Text. Auch in diesem Ausführungsbeispiel wird ein Kameraauslösesignal

$K_K$ gebildet unter Berücksichtigung der Kategorienzugehörigkeit des vermessenen Fahrzeugs.

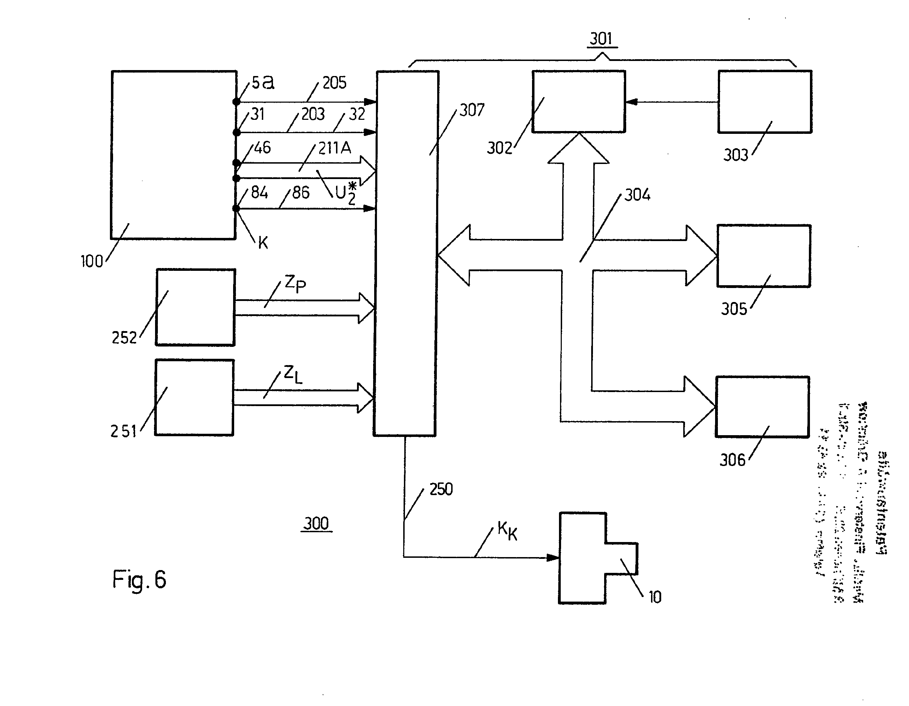

Die Fig. 6 zeigt als weitere Variante der Erfindung eine mit einem Mikroprozessor arbeitende Schaltanordnung <u>300</u>. Der Doppler-Radar-Geschwindigkeitsmesseinrichtung 100, siehe Fig. 1 und entsprechender Text, und den digitalen Kodierschaltern 251 und 252, siehe Fig. 5 und entsprechender Text, ist für die Verarbeitung der verschiedenen Signale ein Mikroprozessor 301 zugeordnet. Der Mikroprozessor 301 weist eine zentrale Steuereinheit 302 auf, welcher ein Taktgeber 303 zugeordnet ist. Ueber eine Sammelschiene 304 für Daten, Adressen und Steuersignale steht die zentrale Steuereinheit 302 mit einem Festwertspeicher 305 und einem Schreib/Lese-Speicher 306 sowie einer Eingabe/Ausgabe-Einheit 307 in Verbindung.

Dieser Eingabe/Ausgabe-Einheit 307 werden über die Leitung 205 die Doppler-Schwingungen ($f_D$) vom Schaltungspunkt 5a der Doppler-Radar-Geschwindigkeitsmesseinrichtung 100 zugeführt. Ausserdem wird von der Ausgangsklemme 31 über die Leitung 203 der Einfahrtmeldeimpuls 32 an die Eingabe/Ausgabe-Einheit 307 geführt. Ueber die Leitung 211A wird sodann, hier in digitaler Form, der Messwert $U_2^*$ (siehe Fig. 5 und zugehöriger Text) an die Eingabe/Ausgabe-Einheit 307 geleitet. Schliesslich wird noch vom Ausgang 84 über die Leitung 86 das von der Doppler-Radar-Geschwindigkeitsmesseinrichtung 100 gebildete Kameraauslösesignal K zur Eingabe/Ausgabe-Einheit 307 geführt. Eine Leitung 250 führt der Eingabe/Ausgabe-Einheit 307 das im Mikroprozessor 301 gebildete Fahrzeugkategorie abhängige Kameraauslösesignal $K_K$ an die Kamera 10.

Die zentrale Steuereinheit 302 steuert den ganzen Ablauf im Mikroprozessor 301 gemäss einem im Festwertspeicher 305 gespeicherten
kodierten Programm. Zwischenergebnisse von Rechnungsoperationen,
Variable, veränderliche Sprungadressen und Rücksprungadressen werden
im Schreib/Lese-Speicher 306 gespeichert und bei Bedarf abgerufen
oder geändert. Der Taktgeber 303 leifert der zentralen Steuereinheit
die für den Ablauf erforderlichen Taktsignale.

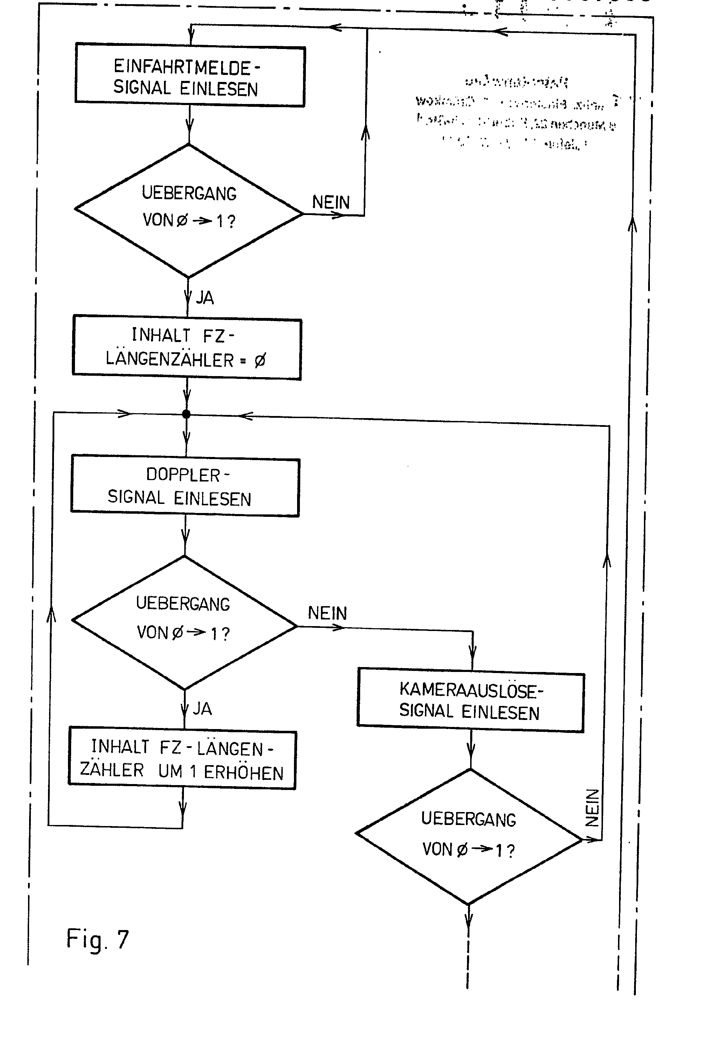

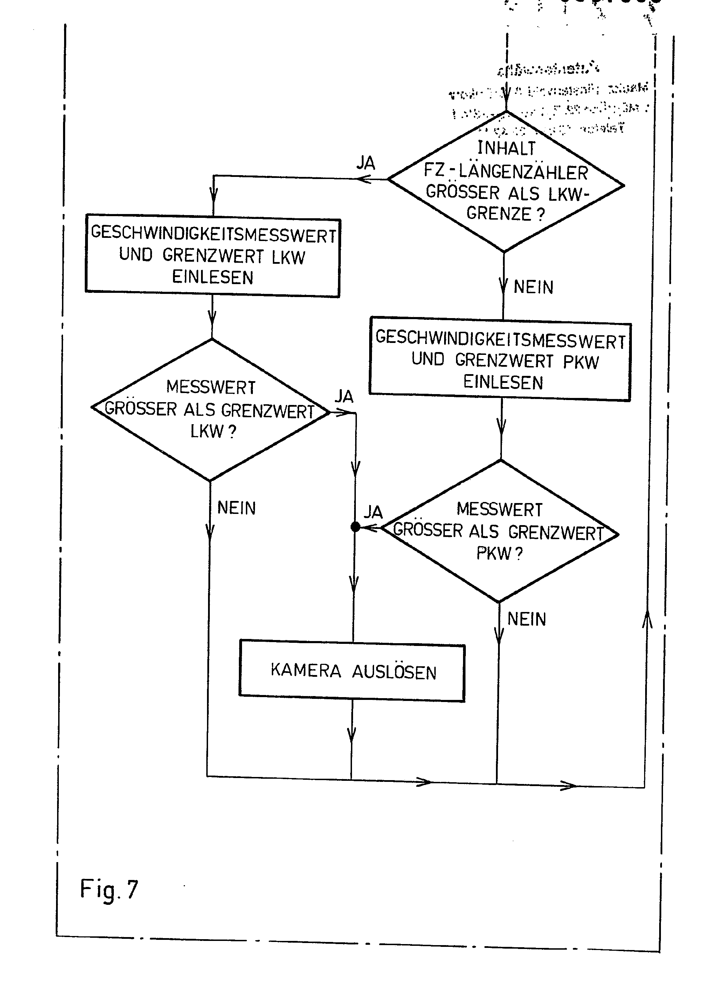

Der Prozessablauf im Mikroprozessor 301 ist als Flussdiagramm in Fig. 7
dargestellt.

Der Prozessablauf ist wie folgt:
Zuerst wird gewartet, bis durch einen logischen Uebergang, beispielsweise von logisch 0 auf logisch 1 des Einfahrtmeldeimpulses 32 die
Einfahrt eines Fahrzeuges in den Radar-Strahlbereich $\propto$ gemeldet
wird. Nach einer solchen Meldung wird ein als Fahrzeuglängenzähler
FZ bezeichnetes Register im Schreib/Lese-Speicher 306 nach jedem
logischen positiven Uebergang im Doppler-Signal als Zuwachs gezählt.
Dazu wird das Doppler-Signal $f_D$ neu eingelesen und auf positive logische
Uebergänge untersucht. Ebenfalls ständig auf einen logischen positiven
Uebergang wird das über die Leitung 86 gegebenenfalls zugeführte Kameraauslösesignal K untersucht.

Wird ein solcher Uebergang im Kameraauslösesignal K festgestellt, so
wird der momentane Inhalt des Fahrzeuglängenzählers FZ verglichen mit
dem gespeicherten Wert für die Höchstgeschwindigkeitsgrenze für Lastwagen. Diese Grenze ist so angesetzt, dass bei einer Ueberschreitung derselben mit Sicherheit ein Lastkraftwagen gemessen worden ist.

Ist der Inhalt des Fahrzeuglängenzählers grösser als diese Grenze, dann wird der tatsächliche Geschwindigkeitsmesswert $U_2^*$ des vermessenen Fahrzeuges mit dem Geschwindigkeitsgrenzwert für Lastkraftwagen verglichen. Ist der Inhalt des Fahrzeuglängenzählers unterhalb dieses für Lastkraftwagen gültigen Grenzwertes, so wird der tatsächliche Messwert $U_2^*$ anschliessend mit dem Geschwindigkeitsgrenzwert für Personenkraftwagen verglichen. Erweist sich der Messwert $U_2^*$ dabei grösser als der eingestellte Höchstgeschwindigkeitswert für Personenkraftwagen, so wird durch Abgabe des Fahrzeugkategorie abhängigen Kameraauslösesignals $K_K$ von der Eingabe/Asugabe-Einheit 307 über die Leitung 250 zur Kamera 10 (siehe Fig. 6) diese ausgelöst. Erweist sich hingegen dieser Messwert $U_2^*$ als kleiner als dieser Grenzwert für Personenkraftwagen, so wird auf die Abgabe eines Fahrzeugkategorie abhängigen Kameraauslösesignals $K_K$ verzichtet, da das betreffende vermessene Fahrzeug den zulässigen Geschwindigkeitsgrenzwert nicht überschritten hat. Anschliessend erfolgt ein Sprung des Ablaufes zurück zum Anfang des Flussdiagramms.

- 1 -

Patentansprüche :

1. Verfahren zur Auswertung von Signalen einer Geschwindigkeitsmesseinrichtung, welche nach dem Doppler-Radar-Prinzip arbeitet und welche
bei Einfahrt eines Fahrzeuges in den Radar-Strahlbereich ein Einfahrtsmeldesignal abgibt, sowie ein Doppler-Signal, einen für die Geschwindigkeit des vermessenen Fahrzeugs repräsentativen Messwert und bei Erfüllung bestimmter Bedingungen ein Kameraauslösesignal liefert, dadurch
gekennzeichnet, dass während der Durchfahrt des zu vermessenden Fahrzeuges von ihm verursachte Dopplerschwingungen gezählt und aus der Anzahl der Dopplerschwingungen, unter Berücksichtigung der Wellenlänge
der Schwingungen des Radarsenders und dessen Aufstellungswinkels zur
Fahrbahn, automatisch ein Längenkriterium gebildet wird.

2. Verfahren nach Anspruch 1, dadurch gekennzeichnet, dass das so gewonnene Längenkriterium mit mindestens einem gespeicherten Längenkriterium verglichen wird und in Abhängigkeit vom Vergleichsergebnis automatisch ein bestimmter von mindestens zwei vorgegebenen Grenzwerten
für die Beurteilung einer Geschwindigkeitsübertretung ausgewählt wird.

3. Verfahren nach Anspruch 2, dadurch gekennzeichnet, dass eine Kameraauslösung zur Identifikation eines zu schnell gefahrenen Fahrzeuges
in Abhängigkeit vom Vergleichsergebnis erfolgt.

4. Vorrichtung zur Ausführung des Verfahrens nach Anspruch 1, dadurch gekennzeichnet, dass der Doppler-Radar-Geschwindigkeitsmesseinrichtung

7 81 01

(100) ein Zähler (201) für das Zählen der während der Durchfahrt des vermessenen Fahrzeugs durch den Radarstrahlbereich ( $\alpha$ ) verursachten Dopplerschwingungen zugeordnet und dem Zähler (201) ein Dekodierer (207) nachgeschaltet ist, welcher beim Erreichen eines bestimmten Zählerstandes (N) ein Dekodiersignal (D) abgibt. (Fig. 3).

5. Vorrichtung nach Anspruch 4, dadurch gekennzeichnet, dass das Dekodiersignal (D) vom Ausgang (210) des Dekodierers (207) über eine Leitung (212) an den Eingang (214) einer Uebertretungsschaltanordnung (215) geführt ist, welcher auch von der Radar-Geschwindigkeitsmesseinrichtung (100) ein Messwert ($U_2$) der Geschwindigkeit des vermessenen Fahrzeuges zugeführt (213) ist und die Uebertretungsschaltanordnung (215) zwei Komparatoren (224, 226) aufweist zum Vergleich des Messwertes ($U_2$) mit einstellbaren Geschwindigkeitsgrenzwerten, wobei das Dekodiersignal (D) von der Ausgangsklemme (214) einem ersten UND-Tor (219) an einen ersten Eingang (218) direkt und einem zweiten UND-Tor (221) an einen ersten Eingang (220) über einen Inverter (222) zugeführt ist und je der zweite Eingang (233) des ersten UND-Tores (219) an den Ausgang (231) des ersten Komparators (224) und der zweite Eingang (236) des zweiten UND-Tores (221) mit dem Ausgang (234) des zweiten Komparators (226) verbunden ist und der Ausgang (237, 238) des ersten und des zweiten UND-Tores (219, 221) über ein ODER-Tor (243) und dessen Ausgang (244) mit einem ersten Eingang (246) eines dritten UND-Tores (247) verbunden ist und ihm das Uebertretungssignal ($U_S$) zuführt, wobei dem zweiten Eingang (248) des dritten UND-Tores das Kameraauslösesignal (K) der Doppler-Radar-Geschwindigkeitsmesseinrichtung (100, 84)

7 81 01

zugeführt ist und vom Ausgang (249) des dritten UND-Tores das dort erscheinende Fahrzeugkategorie-abhängige Kameraauslösesignal ($K_K$) über eine Leitung (250) an die Auslöseklemme (11) der Kamera (10) geführt ist. (Fig. 3).

6. Vorrichtung nach Anspruch 5, dadurch gekennzeichnet, dass die Verarbeitung der von der Geschwindigkeitsmesseinrichtung (100) gelieferten Signale ($f_D$, 32, $U_2$, K) in einem Mikroprozessor (301) erfolgt, dem von Kodierschaltern (251, 252) Zahlenwerte ($Z_L$, $Z_P$) für die Höchstgeschwindigkeitswerte unterschiedlicher Fahrzeugkategorien zugeführt sind. (Fig. 6, Fig. 7)

Fig. 1

100

Fig. 2

Fig. 3

8 Blätter
sheets
planches

Blatt
sheet
planche 4

0067905

Fig. 4

Fig. 5

Fig. 6

Fig. 7

INHALT
FZ - LÄNGENZÄHLER
GRÖSSER ALS LKW-
GRENZE ?

JA

NEIN

GESCHWINDIGKEITSMESSWERT
UND GRENZWERT LKW
EINLESEN

GESCHWINDIGKEITSMESSWERT
UND GRENZWERT PKW
EINLESEN

MESSWERT
GRÖSSER ALS GRENZWERT
LKW ?

JA

NEIN

MESSWERT
GRÖSSER ALS GRENZWERT
PKW ?

JA

NEIN

KAMERA AUSLÖSEN

Fig. 7

**Europäisches Patentamt**

## EUROPÄISCHER RECHERCHENBERICHT

EP 81109901.9

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE - B - 1 144 953 (TELEFUNKEN)<br><br>* Spalte 1, Zeilen 17-51; Spalte 3, Zeilen 2-5; Ansprüche 1, 7 *<br><br>-- | 1-3 |
| D,Y | CH - A - 470 674 (ZELLWEGER AG USTER)<br><br>* Spalte 12, Zeilen 43-67; Spalte 13, Zeilen 33-36 *<br><br>---- | 1-3 |

**KLASSIFIKATION DER ANMELDUNG (Int Cl⁷)**

G 08 G   1/10
G 08 G   1/015
G 01 S 13/92

**RECHERCHIERTE SACHGEBIETE (Int. Cl.³)**

G 08 G   1/00
G 01 S 13/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 23-09-1982 | DRÖSCHER |